# EUROPEAN PATENT APPLICATION

(11) **EP 1 982 672 A1**
(43) Date of publication of application: **22.10.2008**
(21) Application number: 07425223.0
(22) Date of filing: 18.04.2007
(51) Int. Cl.: A61C 8/00

(54) **Dental implant device**

(71) Applicant: Micerium SPA, 16030 Avegno GE (IT)
(72) Inventor: Benzi, Ricardo, Vigevano (Pavia) (IT)
(74) Representative: Karaghiosoff, Giorgio Alessandro

(57) **Abstract**

Dental implant device comprising an implant composed of an endosseous screw or pin (1), which screw (1) has an head (2) fastening a prosthesis member or a member (11) supporting said prosthesis member (so called abutment) that is intended to be fastened or incorporated or embedded in the prosthesis member wherein said head (2) on the side fastening the prosthesis member has a terminal, axial extension (202) having a non round cross section or an axial recess having a non round cross section, the axial extension (2) having a non round cross section and/or the corresponding axial recess (211) of the prosthesis member or of the member (11) supporting and fastening the prosthesis or viceversa the axial recess of the implant and/or the axial extension of the prosthesis member or of the member supporting and fastening the prosthesis being provided with a perimetral shell composed of a ring of radial teeth (302).

## Description

The present invention relates to a dental implant device comprising an implant composed of an endosseous screw or pin, i.e. intended to be inserted and/or integrated in the bony tissue, which screw has an head for fastening a prosthesis member or a member supporting said prosthesis member (so called abutment) that is intended to be fastened or incorporated or embedded in the prosthesis member and which head on the side fastening the prosthesis member has a terminal, axial extension having a non round cross section or an axial recess having a non round cross section, the prosthesis member and/or the member supporting the prosthesis member and fastening it to the implant being provided with an axial recess having a non round cross section or with a terminal axial extension having a non round cross section respectively which have shape and size corresponding to said terminal, axial extension having a non round cross section or to said axial recess having a non round cross section respectively provided on the implant head and engaging therewith.

Devices of this type are known and have been used for a long time. A great amount of different types of these implants and of relative abutments for fastening prosthetic members are known. Generally speaking, the main problem is due to the fact that the threaded pin and the head composing the implant replace the root apparatus of one or more teeth that will be replaced by the prosthesis and so all stresses exerted by the chewing action and relating to a mere dental contact are discharged by said implant. Characteristics of the implant and size thereof are highly determined by the size of the bone wherein the implant has to be inserted. In this case, it is not possible obviously to increase as one desires the size of the implant in order to achieve a greater resistance to stresses, since the bony tissue has size and shape that are' averagely defined. Moreover often there is a lack or shortage of bony tissue, so there is the need of providing complicated and expensive interventions for bony reconstruction, that can be carried out by few specialists and that however need relatively long time in order to install implants of conventional size, and high costs to be paid by the patient.

Generally the implant is inserted into an implantation channel, seat or hole that is done by suitable tools in the bony tissue. In order to insert the implant into the seat or possibly also to take the implant out from the seat by a rotating movement screwing and unscrewing it, particularly when the implant is provided with an external thread, an axial extension or an axial recess is used on the implant head having a non round cross section. Such extension or such recess allow the engagement of the implant by handling means by which it is possible to exert a torque screwing and unscrewing the implant.

Moreover with the provision of means supporting and fastening the prosthesis to the implant such as so called abutments, these can be provided in turn with an axial recess or an axial extension having a non round cross section, which are shaped correspondingly to the extension or recess respectively of the implant head and have such a size to be engaged with said extension or said recess generating relative angular positioning geometrical reference points between the implant and the prosthesis, as well as making the coupling between the prosthesis and the implant more resistant to stress torques exerted on the prosthesis when accomplishing its function.

Above implants are known as two-part implants since they are provided in combination with mounting abutments intended to support the real prosthesis that is fastened or manufactured or applied in different ways on said abutments suitable prepared to this aim. According to the standard defined by the Usa Federal Drug Administration (FDA) devices of said type are called implants having at present maximum diameters having dimensions whose lowest threshold is 3,4 mm and are firmly applied.

Abutments can be fastened to the implant by a coaxial screw going through an axial through hole of the abutment and engaging by at least a threaded end in a dead hole coaxially provided in the implant. This type of coupling is a real prosthetic connection wherein the screw is tightened by a predetermined torque and it guarantees to movably connect the prosthesis to the implant but in a firm and solid way. However in order to guarantee sufficient mechanical resistances at present bodies regulating drugs and biomedical devices as the above mentioned FDA provide the diameter of the implant and of the screw and so also of the abutment not to be lower than said lowest threshold indicated above.

At present there are also implant devices so called MDI, i.e. Mini Dental Implants. Mini dental implants are different from the implant class mainly because they have maximum diameters whose size is smaller than minimum size provided for implants according to above standards.

At present there is not a univocal definition for the term mini implant, even if in specific technical field the person skilled in the art univocally identifies a predetermined device class by said term.

As regards the present invention, by mini implant particularly devices of the type described hereinbefore are defined wherein the maximum diameter of the pin or of the screw member of the implant has a diameter from 1,2 to 3,0 mm, particularly from 1,8 to 2,8 mm and preferably from 2,5 to 2,7.

As regards the head fastening the prosthesis member and/or the abutment, said head has an end supporting surface, so called platform, having a maximum diameter from 2,0 to 4,0 mm, particularly from 2,8 and 3,7 mm, preferably from 3,4 to 3,6 mm.

Said fastening head is connected to the endosseous pin or screw portion by a tapered portion having a relatively large opening angle.

This type of implants at present is not suitable to support mechanical stresses exerted by teeth and the application thereof is limited to positioning stabilization functions by movably fastening moving prostheses, such as dentures or the like.

Particularly according to a known type of such mini implants, the head fastening the prosthesis comprises, integrally, a terminal for the movable snap coupling by elastically deformation forcing a fastener or a snap elastic seat, that is fastened, anchored or incorporated in the prosthesis. Generally said terminal is composed of a round or spherical head and said coupling fastener is composed of an engagement socket, cup or seat for elastically forcing said spherical head.

Other alternatives provide the fastening head to be composed of a so called post, that is an axial pin-like extension.

The fact of movably fastening the prosthesis to the spherical head by a snap connection does not clearly guarantee the resistance to considerable stresses exerted on the prosthesis and does not guarantee also to keep a predetermined orientation of the prosthesis with respect to the pin with reference to an axis of rotation parallel or coinciding with the implant axis. The post in turn is relatively thin and it does not guarantee also a sufficient mechanical resistance in order to guarantee a prosthesis of an individual tooth to be fastened to the mini implant by a conventional prosthetic connection of the type used in known implants.

On the other hand mini implants, due to their reduced size, are less affected by application problems in the case of shortage of bony tissue and so in this condition in many cases their use can leave the use of bony reconstruction techniques out of consideration.

The invention aims at improving a device of the type described hereinbefore in order to allow a greater strength of the implant and the implant and prosthesis or abutment combination without the need of dimensions of said implant losing the above advantage (inserting in atrophic ridge).

Moreover the invention aims at improving an implant of the above type in order to avoid at a great extent the need of bony reconstruction interventions in the case of shortage of bony tissue.

The invention achieves the above aims by providing a device of the type described hereinbefore wherein the axial extension having a non round cross section and/or the corresponding axial recess of the prosthesis member or of the member supporting and fastening the prosthesis or viceversa the axial recess of the implant and/or the axial extension of the prosthesis member or of the member supporting and fastening the prosthesis have a perimetral shell composed of a ring of radial teeth.

Teeth of such ring can extend all along the axial length of said extension or of said recesses or only for a part of said axial length.

Moreover said ring of teeth can be composed of a plurality of teeth evenly arranged, that is spaced apart one with respect to the other by the same distance.

A variant can provide said ring of teeth to be continuous, i.e. extending for all the circumference.

As an alternative said ring of radial teeth can extend only for a segment or sector of the shell surface of the extension or recess.

According to an advantageous embodiment the ring of teeth is provided along two angular sectors or segments of the shell wall that are diametrically opposite and having an angular size lower than 180° whereas they are separated by two diametrically opposite flat surfaces or flat portions and forming two opposite handling surfaces of a tool for applying a torque.

Particularly the two diametrically opposite flat surfaces are perpendicular to a diametral plane constituting the plane of symmetry of the two angular diametrically opposite ring segments.

Again according to a further advantageous characteristic, teeth of ring or rings of teeth have such a radial extension that peaks thereof coincide with a predetermined ideal circumference.

Peaks of teeth of the ring or rings of teeth are preferably provided as flattened ones the surface of the head end of said teeth being bent in a way corresponding to said ideal circumference.

A particular embodiment can provide the circumference of rings of teeth to be provided only on the terminal axial extension or on the recess of the implant head, whereas the prosthesis member and/or the member supporting and fastening the prosthesis has an axial recess and/or an axial extension respectively with a circular cross section and a diameter that is equal to or lower than the diameter of said ideal circumference, said diameter having such a size to correspond to the diameter of the axial extension and/or of the axial recess of the prosthesis and/or members for supporting and fastening prostheses already on the market.

The axial extension or the axial recess of the implant head and of the member supporting and/or fastening the prosthesis are made like so called "axial multi-grooved couplings" that are widely known in mechanical field and allow to transfer advantages of the resistance to torque to implant and abutment combinations. Moreover the adhering surfaces of the prosthesis, that is between the abutment and the implant are considerably increased and a great amount of contact surfaces are generated having different inclinations. All this helps in increasing the resistance to the torque, but it increases also the firmness of the shape coupling and so also the resistance to other types of stresses such as transverse forces acting on the prosthesis and/or on the member supporting and fastening the prosthesis, that is on the abutment.

According to a further characteristic of the invention, said axial terminal extension and the corresponding implanting recess have an axial length greater than 0,5 mm and preferably from 0,5 mm to 3 mm, preferably from 1,2 to 2,5 mm.

With respect to the overall length of the implant, the length of said axial terminal extension or of said recess is from 6% to 15% of said overall length.

Due to such dimensions, with respect to prior art, the axial penetration length of the axial terminal extension in the axial recess of one and of the other one of the two parts consisting in the implant and the prosthesis or the member supporting the fastening the prosthesis to the implant respectively, i.e. of the abutment is such to increase the resistance of the coupling also to stresses by forces radial or transverse to the axis of the implant and/or of the prosthesis.

Still according to a further characteristic, that can be provided in any combination with one or more of the previous characteristics, the axial extension and/or the axial recess in the implant head have a maximum diameter comprising the toothed ring that is smaller than the maximum diameter of said head. In a particular embodiment said maximum diameter of said head is at most equal to 3,6 mm or smaller than it.

The fact of making the axial extension and/or the axial recess as defined above as multi-grooved one allow to divide the applied torque in a number of forces acting perpendicular to radial or substantially radial fronts of teeth equal to the number of said radial or substantially radial fronts, so that the overall value of the torque is resolved in a predetermined amount of forces each one having an intensity corresponding to a fraction of said force for the number of said resolution forces. Thus the pressure acting on each surface formed by each tooth from of the toothed ring is also reduced.

Said characteristics can be advantageously applied to a combination of implant and member supporting and fastening the prosthesis to the implant, so called abutment that can be fastnened one with the other by an axial tightening screw.

In order to improve the coupling between the implant and the member supporting and fastening the prosthesis to the implant of the screw type, the invention provides a combined connection of said supporting and fastening member and said implant one with the other by a screw and by a morse taper coupling, that is by coupling mutually contacting tapering surfaces being tapered at about. 4 to 5°.

Particularly said combination provides morse taper coupling tapering surfaces to be provided between an intermediate tapered non threaded portion of the screw and a corresponding tapered portion of the hole for screwing the screw in the implant.

It is also possible for the tapered portion of the screw to be engaged also like morse taper with a tapered portion of the screw through hole provided in the member supporting and fastening the prosthesis to the implant, i.e. the abutment.

Said tapered portion of the through hole in the member supporting and fastening the prosthesis to the implant, i.e. the abutment can be also the continuation of the tapered portion of the hole for screwing the screw in the implant.

A particular embodiment provides the screw to have an initial threaded portion at the end opposite to the handling head and a non theaded intermediate portion widening in a tapered way from said threaded end to the screw head and having a tapering of about 4 to 5°, whereas the implant has a dead hole for screwing the screw with a threaded terminal portion intended to cooperate with the threaded end of the screw and a tapered portion widening in a tapered way from said threaded portion to the end of the implant head to which the prosthesis is fastened and having a tapering corresponding to the one of the tapered portion of the screw.

A further improvement provides the threaded terminal portion of the screw to project beyond its end by an initial insertion extension having a diameter smaller than the one of threads and/or corresponding to the diameter of the cylindrical shaft defined by recesses of threads.

Said initial insertion extension cooperates with the dead threaded hole in order to optimally guide the tip of the screw in the hole and to guarantee a correct insertion of threads of the screw and of the dead hole one with respect to the other.

Due to such construction by progressively tightening the screw, stresses acting on the thread are progressively transferred on tapered contact surfaces so the Morse Taper coupling is achieved resembling a single piece construction. Moreover the packing and loosening of the screw are avoided. So if a torque equal or greater than the originally one used for tightening is not applied it is not possible to release and unscrew the screw and so to replace prosthetic components.

Moreover due to such combination it is possible to provide members for supporting and fastening the prosthesis composed of spheroidal terminals to which it is possible to couple temporary prostheses by conventional engagement snapping seats or fasteners on said spherical terminal and particularly as the one known and used in mini implants.

In this case, spherical fastening terminals for movably elastically snapping fastening prostheses are connected to the implant not only by the tighetning action, but also by the Morse Taper coupling that can compared to a monolithic construction of the implant and of the terminal or it is very similar to this as regards mechanical characteristics.

Still according to a further advantageous characteristic allowing to improve the distribution of forces on the implant and the primary stability of the implant in the bony tisse, the threaded screw member of said implant has a progressive variation of coils from the apical region of the implant, that is from the region associated to the end of the head fastening the prosthesis to the region of the opposite end.

An embodiment provides the pitch between coils of the thread of the implant to be kept constant for a certain number of coils corresponding to a certain partial length of the threaded portion of the implant.

Particularly the screw or threaded part of the implant is divided at least in two, three or more subsequent segments, along each one of them the pitch is constant, while the pitch between coils varies for each segment more close to the implant end opposite to the head fastening the prosthesis, with respect to the pitch of the adjacent segment on the side of said end fastening the prosthesis.

It is possible for the pitch of the thread of adjacent segments to descrease or to increase with the distance of the segment from the implant end opposite to the head fastening the prosthesis decreasing.

It is also possible for the variation of the thread pitch not to follow a progressive law depending on the position of the segment on the length of the implant screw member.

Lenghts of said segments can be equal or also different and particularly said lenghts increase depending on the increase of the distance of the segment from the end fastening the prosthesis, that is from the apical end.

Advantageously typical pitches between coils are from 0,6mm to 2mm.

A preferred ambodiment provides three segments with a different pitch between coils that starting from the apical end is of 1.5mm in the first segment, 1,3 in the second one and 1,1 in the third and last one at the implant insertion end.

Characteristics listed above can be applied individually or in any combination to conventional implants, that is having maximum diameters exceeding 3,6mm.

Moreover said characteristcs can be also applied individually and/or in any combination with a implant of the so called mini implant type.

Said characteristics regarding the axial coupling of the multi-grooved type between implant and abutment, of the coupling of the abutment by coaxial tightening screw in combination with a Morse Taper coupling and especially when said Morse Taper coupling occurs between the screw and the implant and/or also the abutment and also the particular construction of the implant thread allow to provide a mini implant in combination with a prosthetic connection of the conventional type that is by an inner screw keeping mechanical resistance characteristics of the implant unchangeable and possibly improving them both regarding its stability in the bony tissue and the coupling between the implant and prosthetic components.

Therefore an advantegous embodiment of the invention provides a device of the type described hereinbefore wherein the implant is of the so called mini implant type, said mini implant being provided with an axial dead hole with a terminal threaded part and a tapered part widening towards the end fastening prosthetic components, while said fastening end has an head for fastening prosthetic components and particularly a member supporting and fastening the prosthesis, so called abutment that is provided with a non round terminal axial extension comprising a continous or partial ring of radial teeth, said member supporting and fastening the prosthesis, that is the abutment being provided with an axial recess having a cross section corresponding to the cross section of said terminal axial extension and said member supporting and fastening the prosthesis being provided with a through hole through which the tightening screw passes engaging by a threaded terminal portion in the threaded portion of the dead hole for the screwing in the implant and by the tapered portion like a morse taper coupling member in the tapered part of said dead hole of the implant.

Due to such characteristics, even if the implant has maximum diameters of 3,6 mm and also smaller ones, and the screw has a maximum diameter of about 2mm it is possible to obtain mechanical characteristics that can be compared to the ones of conventional implants having greater diameters and also better ones even if they have dimensions of mini implants.

So the invention allows also to obtain a so called mini implant that differently from what has been considered possible in prior art is suitable not only for simply stabilizing mobile prostheses, but to be used in combination with a real prosthetic connection. Therefore due to reduced size of the implant, there are possibilities for applying prostheses under conditions that at present would not allow to use implant having standard diameter for so called two-part implants, all this without the need of expensive, long and difficult bony reconstruction techniques.

Further characteristics of the invention are object of subclaims.

Characteristics of the invention and advantages thereof will be more clear from the following description of a non limitative embodiment shown in annexed drawings, wherein:
Figures 1 and 2 are an implant according to the present invention the right half of figure 2 being shown in section according to a diametral plane.
Figure 3 is a perspective view of the implant according to the present invention.
Figure 4 is a top view on the distal end of the implant according to previous figures.

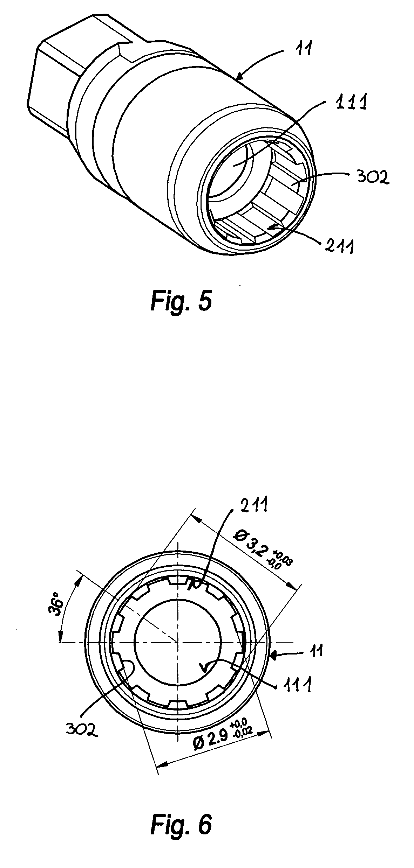

Figure 5 is a perspective view of the abutment.
Figure 6 is an axial view on the recess provided with a toothed ring of the abutment.

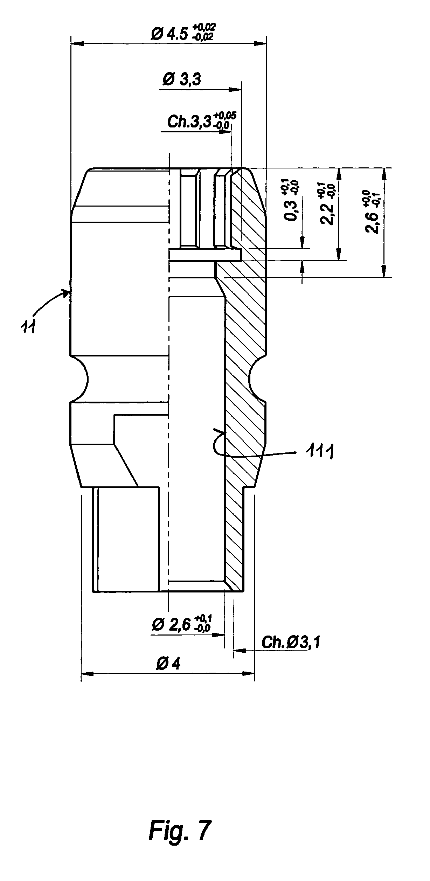

Figure 7 is a partial section side view of the abutment according to figures 5 and 6.
Figure 8 is a perspective view of the screw fastening the abutment to the implant.
Figure 9 is a partial section side view of the screw according to figure 8.
Figures 10 and 11 are an enlargement of the surface from which so called macro-pores are clear, while figure 11 is the surface enlarged by 10.000 times and so it shows the nanometric structure.
Figure 12 is the roughness measurement line of a portion of length L of the surface along a line.

With reference to figures, there is shown an implant according to the present invention wherein different characteristics of the invention are provided in combination with a construction of said implant like a so called mini implant according to definitions provided above.

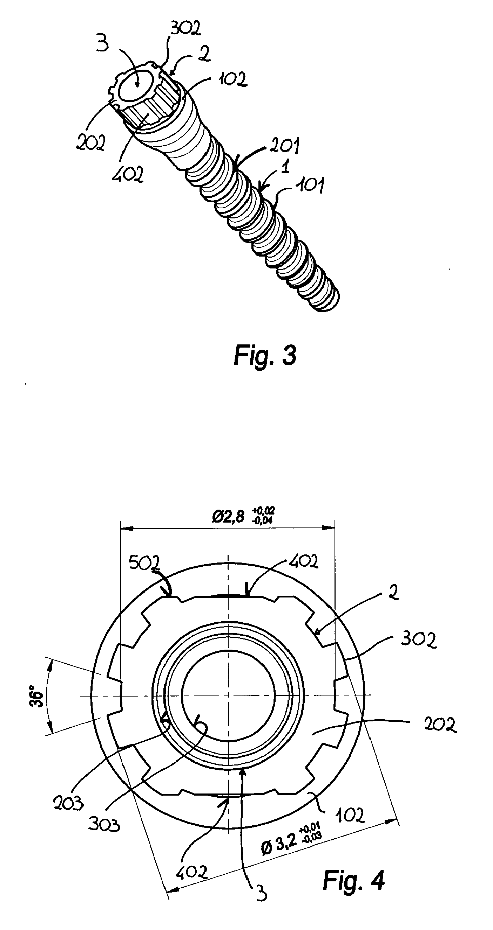

As it results from figures, the implant has a screw member 1 with an external thread 101 whose crest 201 is flattened. The head fastening the prosthesis 2 has a so called implant platform 102 having a diameter of 3.6 mm and it is constituted of the transverse head side of the implant. A terminal axial extension 202 having a non round cross section and particularly being provided with a ring of a plurality of radial teeth 302 projects from said head side. With reference to figure 4 radial teeth are arranged along two opposite shell wall portions of said axial extension 202 which shell wall portions have an angle size that is lower than 180° and are simmetrically oppositely arranged with respect to a diametral plane of said extension that is perpendicular to two opposite flattening portions 402 whose ideal prolongation plane intersect end teeth of the two ring portions which have a bevel 502 corresponding to said intersection.

Radial teeth 302 are flattened at peaks by a cylindrical surface aligned with the shell surface of an ideal cylinder coaxial with respect to said extention 202 and/or to the axis of the implant.

Coaxially along said extension and partially inside the head 2 of the implant that is in the region so called implant neck there is provided a dead hole for screwing a screw 10 tightening an abutment 11 or another member supporting and fastening a prosthesis to the implant.

The dead hole 3 has a more inner end portion 103 that is threaded and intended to cooperate with a terminal threaded portion 110 of a screw 10 tightening said abutment 11 or another member supporting and fastening the prosthesis. In the direction of the end of the axial toothed extension 202 a tapered part 203 widening towards the outlet end at the head side of said toothed extension 202 is connected to said threaded part 103.

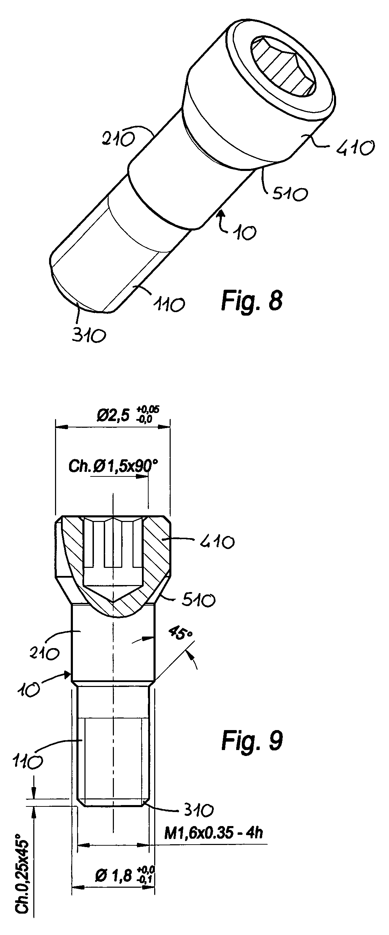

The screw shown in details in figures 8 and 9 has an intermediate portion 210 that is also tapered correspondingly to the tapered portion 203 of the dead hole 3.

The tapering of the hole portion 203 and of the screw 10 is about 4 to 5° and it is a so called Morse Taper coupling that with the screw 10 in the tightened condition generates a coupling between -the abutment 11 or another member supporting the prosthesis and the implant comparable to a single-piece or a solidal construction of said two parts.

The axial non round and toothed extension 202 has a length of about 2 mm, whereas the implant can have overall lenghts from 14 to 20 mm.

The diameter of the axial extension corresponding to the peak of teeth is about 3,2 mm, whereas it decreases to about 2,8 mm at recesses between teeth and to 2,7 mm at flattening portions 402.

It is clear that the abutment 11 or any member supporting the prosthesis intended to act in combination with said implant has a through axial hole 111 for the tightening screw 10 which hole 111 can possibly but not necessarily be also tapered for at least a part connecting to the tapered portion 203 of the dead hole in the implant and possibly said tapered portion can also cooperate with a tapered portion of the screw 10 like the Morse Taper coupling between screw and implant.

The screw 10 projects beyond the terminal threaded portion 110 by an insertion tip that is flared in a tapared way and it is denoted by 310. This apical extension has no thread and has a diameter that is smaller than the maximum diameter of the thread possibly as the minimum diameter of the terminal threaded portion. It cooperates with the threaded portion 303 of the dead hole 3 in the implant and it allows to accurately guide the insertion of the screw 10 in said hole and the mutual initial engagement of threads of the hole and of the screw.

The opposite end of the screw has an enlarged head 410 connecting to a tapered flare 510 of the screw stem, that is the tapered portion 210, while the hole 111 in the abutment 11, has a corresponding tapered narrowing at an intermediate position of its axial length against which the tapered flare connecting the screw head 410 abuts when the abutment 11 is tightened on the implant.

Moreover the screw head 410 has a non round axial recess 610 for rotationally engaging a tool for screwing and unscrewing said screw.

On the head side faced towards the implant the abutment 11 or the member supporting the prosthesis of any other type has an axial recess 211 that has such a transverse shape and section to axially be implanted on the toothed axial extension 202. In this case a first possibility can provide the recess 211 to have such a shape and size that the shell surface of the recess cooperates with shell surfaces of teeth and/or flattening portions 402 of the toothed axial extension 202. According to an advantageous alternative the shell surface of the recess 211 is preferably made with a shape corresponding, i.e. complementary to the one of the toothed axial extension 202 and so it is also toothed and possibly provided, but not necessarily, with flattening portions such to engage radial teeth of the axial extension of the implant by its radial teeth. Tipically the tightening screw has a maximum diameter of about 2mm. The head 2 of the implant is connected to the screw member 1 by a so called neck part 4 that is made as a tapered one.

The screw member 1 has a diameter of 2mm not considering the thread projection and it tapers towards the end denoted by 5 that is opposite to the head fastening the prosthesis by an inclination of about 1°.

Thread coils have a progressively variable pitch and they start from the apical region with a diameter of 1,1 mm turning into 1,3 mm at a central region and into 1,5mm in the end region connecting to the neck 4.

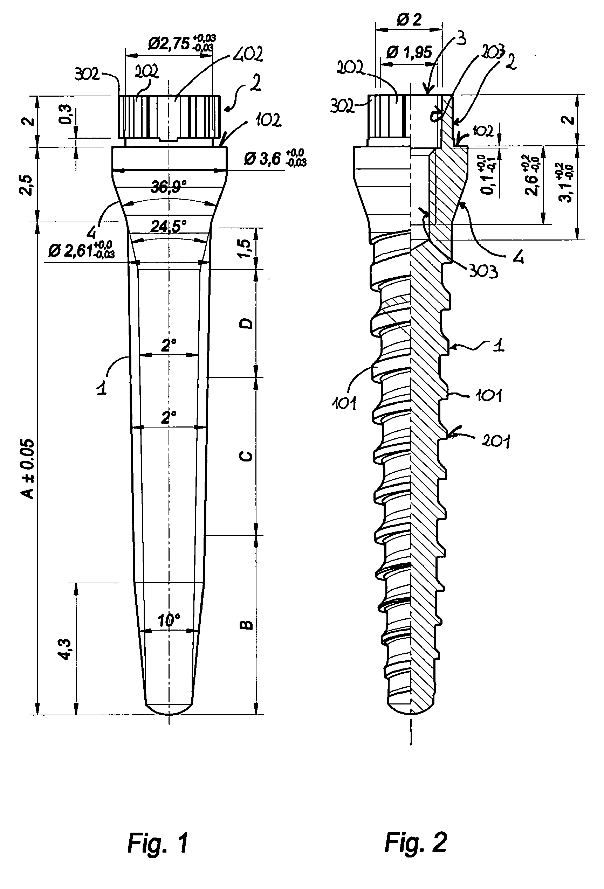

Particularly as results from figure 1, the screw member is divided in three portions one of which is the apical one denoted by B and along which the thread pitch is at its minimum value and it is constant all along the length of said portion B. The central portion C has a thread with an intermediate pitch particularly of 1,3mm remaining constant for the length of said portion, while the portion at the neck denoted by D has a thread with a maximum pitch, particularly of 1,5mm.

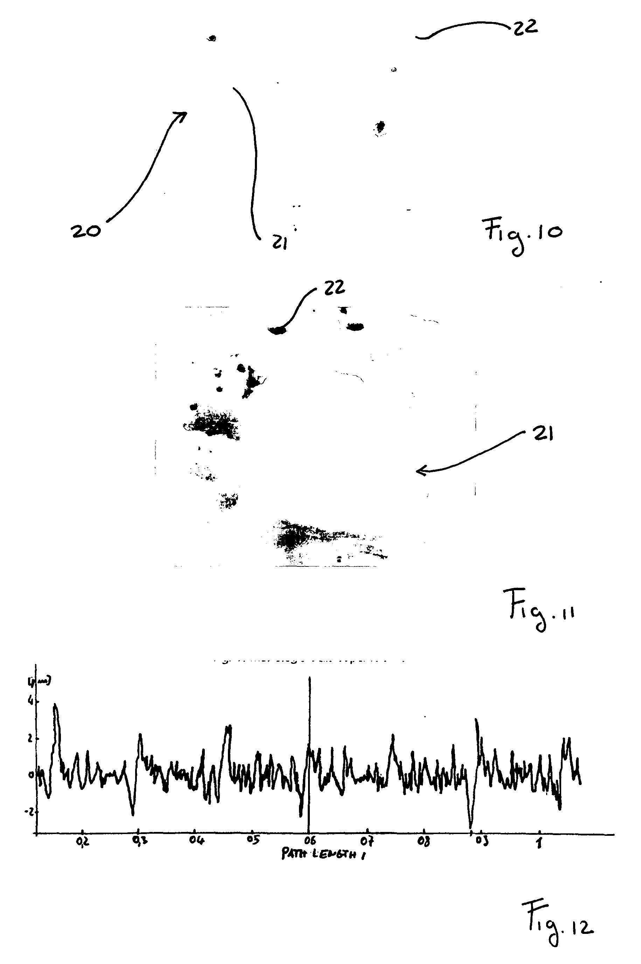

According to a further characteristic of the implant according to the present invention, which characteristic can be provided individually or in combination with previous characteritics, the implant surface in contact with the endosseous tissue is made like a porous one and it has a combination of micro- and nano-pores, i.e. pores having a size of some micron and a secondary porosity with pores having a size of some nanometres. Particularly, such as shown in figure 10 and 11, the endosseous pin and/or the screw member 1 have an outer surface contacting the bony tissue comprising a combination of cones 20 and micropores 21 having diameters of some micron emerging from a secondary structure 22 made of pores having a size smaller than said cones.

Figure 12 shows the roughness measurement line. In this case the surface of the implant contacting the endosseous tissue has an average profile roughness Ra of 600 nm and more precisely of 605,5 nm while the square root of the average of squares of the profile roughness Rq is of 800nm, more precisely 816, 3nm and the maximum profile height Rz is about 7000nm particularly 7188nm.

Such surface effect is achieved by a surface treatment providing a surface treatment roughening step of the electrochemical type and a subsequent decontamination step. Particularly implants have been treated by a galvanostatic anodizing process in a electrolytic bath. Then there is a rinse made with ultrapure water and finally the final decontamination treatment by liquids followed by a cold plasma treatment.

The particular obtained surface structure allows to optimize the screw osseointegration process.

## Claims

1. Dental implant device comprising an implant composed of an endosseous screw or pin (1), i.e. intended to be inserted and/or integrated in the bony tissue, which screw (1) has an head (2) for fastening a prosthesis member or a member (11) supporting said prosthesis member (so called abutment) that is intended to be fastened or incorporated or embedded in the prosthesis member
**characterized in that** said head (2) on the side fastening the prosthesis member has a terminal, axial extension (202) having a non round cross section or an axial recess having a non round cross section, the prosthesis member and/or the member (11) supporting the prosthesis member and fastening it to the implant being provided with an axial recess (211) having a non round cross section or with a terminal axial extension having a non round cross section respectively which have shape and size corresponding to said terminal, axial extension having a non round cross section or to said axial recess having a non round cross section respectively provided on the implant head (2) and engaging therewith
the axial extension (2) having a non round cross section and/or the corresponding axial recess (211) of the prosthesis member or of the member (11) supporting and fastening the prosthesis or viceversa the axial recess of the implant and/or the axial extension of the prosthesis member or of the member supporting and fastening the prosthesis being provided with a perimetral shell composed of a ring of radial teeth (302).

2. Device according to claim 1, **characterized in that** teeth (302) of such ring can extend all along the axial length of said extension (2) or of said recesses (211) or only for a part of said axial length.

3. Device according to claims 1 or 2, **characterized in that** said ring of teeth (302) can be composed of a plurality of teeth evenly arranged, that is spaced apart one with respect to the other by the same distance.

4. Device according to one or more of the preceding claims, **characterized in that** said ring of teeth (3029 is continuous, i.e. extending for all the circumference.

5. Device according to one or more of the preceding claims, **characterized in that** said ring of radial teeth (302) can extend only for a segment or sector of the shell surface of the extension (202) or recess (211).

6. Device according to one or more of the preceding claims, **characterized in that** the ring of teeth (302) is provided along two angular sectors or segments of the shell wall that are diametrically opposite and having an angular size lower than 180° whereas they are separated by two diametrically opposite flat surfaces or flat portions (402) and forming two opposite handling surfaces of a tool for applying a torque.

7. Device according to claim 6 **characterized in that** the two diametrically opposite flat surfaces (402) are perpendicular to a diametral plane constituting the plane of symmetry of the two angular diametrically opposite ring segments.

8. Device according to one or more of the preceding claims **characterized in that** teeth (302) of the ring or rings of teeth have such a radial extension that peaks thereof coincide with a predetermined ideal circumference.

9. Device according to one or more of the preceding claims **characterized in that** peaks of teeth (302) of the ring or rings of teeth are preferably provided as flattened ones the surface of the head end of said teeth (302) being bent in a way corresponding to said ideal circumference.

10. Device according to one or more of the preceding claims **characterized in that** the circumference of rings of teeth (302) is provided only on the terminal axial extension (202) or on the recess of the implant head (2), whereas the prosthesis member and/or the member (11) supporting and fastening the prosthesis has an axial recess (211) and/or an axial extension respectively with a circular cross section and a diameter that is equal to or lower than the diameter of said ideal circumference, said diameter having such a size to correspond to the diameter of the axial extension (2) and/or of the axial recess of the prosthesis and/or members (11) for supporting and fastening prostheses already on the market.

11. Device according to one or more of the preceding claims, **characterized in that** the axial extension (202) or the axial recess (211) of the implant head (2) and of the member (11) supporting and/or fastening the prosthesis are made like so called "axial multi-grooved couplings".

12. Device according to one or more of the preceding claims **characterized in that** said axial terminal extension (202) and the corresponding implanting recess (211) have an axial length greater than 0,5 mm and preferably from 0,5 mm to 3 mm, preferably from 1,2 to 2,5 mm.

13. Device according to one or more of the preceding claims **characterized in that** with respect to the overall length of the implant, the length of said axial terminal extension (202) or of said axial recess (211) is from 6% to 15% of said overall length of the screw member (1)

14. Device according to one or more of the preceding claims **characterized in that** the axial extension 82) and/or the axial recess in the implant head (2) have a maximum diameter comprising the toothed ring (302) that is smaller than the maximum diameter of said head (2).

15. Device according to one or more of the preceding claims, **characterized in that** made of a combination of implant and member supporting and fastening the prosthesis to the implant, so called abutment (11) that can be fastened one with the other by an axial tightening screw (10).

16. Device according to claim 15, **characterized in that** the coupling between the implant (1,2) and the member (11) supporting and fastening the prosthesis to the implant provides a combined connection of said supporting and fastening member (11) and said implant (1,2) one with the other by a screw (10) and by a morse taper coupling, that is by coupling mutually contacting tapering surfaces being tapered at about. 4 to 5°.

17. Device according to claim 15 or 16 **characterized in that** morse taper coupling tapering surfaces to be provided between an intermediate tapered non threaded portion (210) of the screw (10) and a corresponding tapered portion (203) of the hole (3) for screwing the screw (10) in the implant (1,2).

18. Device according to one or more of the preceding claims 15 to 17, **characterized in** thst the tapered portion (210) of the screw (10) is engaged also like morse taper with a tapered portion of the through hole (111) for the screw (10) provided in the member (11) supporting and fastening the prosthesis to the implant, i.e. the abutment.

19. Device according to one or more of the preceding claims 15 to 19, **characterized in that** said tapered portion of the through hole (111) in the member (11) supporting and fastening the prosthesis to the implant (1,2), i.e. the abutment can be also the continuation of the tapered portion (203) of the hole (3) for screwing the screw (10) in the implant.

20. Device according to one or more of the preceding claims 15 to 19, **characterized in that** the screw (10) has a terminal threaded portion (110) at the end opposite to the handling head (410) and a non theaded intermediate portion (210) widening in a tapered way from said terminal threaded portion (110) to the head (410) of the screw (10) and having a tapering of about 4 to 5°, whereas the implant (1,2) has a dead hole (3) for screwing the screw (10) with a threaded terminal portion (303) intended to cooperate with the threaded terminal portion (110) of the screw (10) and a tapered portion (203) widening in a tapered way from said threaded portion (303) to the end of the implant head (2) to which the prosthesis is fastened and having a tapering corresponding to the one of the tapered portion (210) of the tightening screw (10).

21. Device according to one or more of the preceding claims 15 to 20, **characterized in that** as members supporting and fastening the prosthesis there are provided spheroidal terminals to which it is possible to couple provisional prostheses on said spherical terminal by fasteners or engagement snapping seats which are fastened and/or incorporated and/or anchored to the prosthesis.

22. Device according to one or more of claims 15 to 21, **characterized in that** the terminal threaded portion (110) of the screw (10) projects beyond its end by an initial insertion extension (310) having a diameter smaller than the one of threads and/or corresponding to the diameter of the cylindrical shaft defined by recesses of threads and which initial insertion extension (310) cooperates in order to optimally guide the screw and to mutually suitably insert the threaded portions (303, 110) of the hole (3) and of the screw (10) with said hole (3).

23. Device according to one or more of the preceding claims **characterized in that** the threaded screw member (1) of said implant has a progressive variation of coils from the apical region of the implant, that is from the region associated to the end of the head (2) fastening the prosthesis to the region of the opposite end.

24. Device according to claim 23 **characterized in that** the pitch between coils of the thread of the screw member (1) of the implant is kept constant for a certain number of coils corresponding to a certain partial length of the threaded portion of the implant.

25. Device according to claims 23 or 24 **characterized in that** the screw or threaded member (1) of the implant is divided at least in two, three or more subsequent segments (B,C,D), along each one of them the pitch is constant, while the pitch between coils varies for each segment (B, C, D) more close to the implant end opposite to the head (2) fastening the prosthesis, with respect to the pitch of the adjacent segment (B, C, D) on the side of said head (2) fastening the prosthesis.

26. Device according to claim 25, **characterized in that** the pitch of the thread for each segment (B, C, D) increases or descreases with respect to the adjacent segment depending on the increase or decrease of the distance of said segment from the head (2) fastening the prosthesis to the implant.

27. Device according to one or more of the preceding claims 23 to 26 **characterized in that** lenghts of said segments (B, C, D) can be equal or also different and particularly said lenghts increase depending on the decrease of the distance of the segment from the apical end of the implant.

28. Device according to one or more of the preceding claims 23 to 27 **characterized in that** there are provided three segments (B, C, D) with a different pitch between coils that starting from the apical end is of 1.5mm in the first segment, 1,3 in the second one and 1,1 in the third and last one at the implant insertion end.

29. Device according to one or more of the preceding claims **characterized in that** the implant is of the so called mini implant type.

30. Device according to claim 29, **characterized in that** the maximum diameter of the pin or of the screw member (1) of the implant has a diameter from 1,2 to 3,0 mm, particularly from 1,8 to 2,8 mm and preferably from 2,5 to 2,7.

31. Device according to claims 29 or 30, **characterized in that** the head (2) fastening the prosthesis member and/or the abutment, said head has a terminal supporting surface (102), so called platform, having a maximum diameter from 2,0 to 4,0 mm, particularly from 2,8 and 3,7 mm, preferably from 3,4 to 3,6 mm.

32. Device according to one or more of claims 29 to 31, **characterized in that** the implant is of the so called mini-implant type, said mini implant being provided with a dead axial hole (3) having a threaded terminal part (303) and a tapered part (203) widening towards the end fastening prostethic components, while said fastening end has an head (2) fastening prosthetic components and particularly a member (11) supporting and fastening the prosthesis, so called abutment, that is provided with an axial non rouned terminal extension (202) comprising a continuous or partial ring made of radial teeth (302), said member (11) supporting and fastening the prosthesis, i.e. the abutment, being provided with an axial recess (211) having a cross section corresponding to the cross section of said terminal axial extension (202) and said member (11) supporting and fastening the prosthesis being provided with a through hole (111) through which the tightening screw (10) passes engaging by a threaded end portion (110) in the threaded part (303) of the implant screwing dead hole (3) and by tapered part (210) like a Morse Taper coupling member in the tapered part (203) of said implant dead hole (3).

33. Dental implant device comprising an implant made of an endousseous pin or screw (1), i.e. intended to be implanted and/or intagrated in the bony tissue, which screw (1) has an head (2) fastening a prosthesis member or a member (11) supporting said prosthesis member (so called abutment) intended to be fastened or incorporated or embedded in the prosthesis member
**characterized in that**
the implant is a so called mini implant being provided in combination with a member (11) supporting and fastening the prosthesis so called abutment comprising a tightening screw (10) passing through the supporting and fastening member (11) so called abutment, via a through hole (111) and engaging with a dead hole (3) provided in the implant for fastening the prosthesis.

34. Device according to one or more of the preceding claims, **characterized in that** the implant surface in contact with the endosseous tissue is made like a porous one and it has a combination of micro- and nano-pores, i.e. pores having a size of some micron and a secondary porosity with pores having a size of some nanometres.

35. Device according to one or more of the preceding claims, **characterized in that** the endosseous pin and/or the screw member (1) has an outer surface contacting the bony tissue comprising a combination of cones having diameters of some micron emerging from a secondary structure made of pores having a size smaller than said cones.

36. Device according to one or more of the preceding claims, **characterized in that** the surface of the implant contacting the endosseous tissue has an average profile roughness Ra of 600 nm while the square root of the average of squares of the profile roughness Rq is of 800nm and the maximum profile height Rz is about 7000nm.

37. Dental implant device comprising an implant made of an endousseous pin or screw (1), i.e. intended to be implanted and/or intagrated in the bony tissue, which screw (1) has an head (2) fastening a prosthesis member or a member (11) supporting said prosthesis member (so called abutment) intended to be fastened or incorporated or embedded in the prosthesis member **characterized in that** it comprises a surface of the implant contacting the bony tissue according to one or more claims 34 to 36.
